# EUROPEAN PATENT SPECIFICATION

(11) **EP 3 405 046 B1**
(45) Date of publication and mention of the grant of the patent: **09.07.2025**
(21) Application number: 17742079.1
(22) Date of filing: 22.01.2017
(51) Int. Cl.: A23K 10/20, A23K 50/40

(54) **MEAT SNACKS, JERKY, JERKY SAUSAGE AND METHODS OF THEIR MAKING AND USE**
FLEISCHSNACKS, DÖRRFLEISCH, DÖRRWÜRSTCHEN UND VERFAHREN ZU DEREN HERSTELLUNG UND VERWENDUNG
VIANDE SÉCHÉE, SAUCISSE DE VIANDE SÉCHÉE, EN-CAS À BASE DE VIANDE ET LEURS PROCÉDÉS DE FABRICATION ET D'UTILISATION

(30) Priority: 22.01.2016 US 201662286175 P; 04.11.2016 US 201662417647 P
(43) Date of publication of application: 28.11.2018
(60) Divisional application: 21168249.7
(73) Proprietor: International Dehydrated Foods, Inc., Springfield, MO 65808 (US)
(72) Inventor: CAPPOZZO, Jack, C., Springfield MO 65809 (US); LYNCH, Stephanie, Springfield MO 65804 (US)
(74) Representative: Andreasen, Søren Laursen Vasegaard
(86) International application number: PCT/US2017/014474
(87) International publication number: WO 2017/127770

(56) References cited:
- WO-A2-2006/130738
- CN-B- 102 551 075
- GB-A- 1 202 480
- US-A1- 2002 185 084
- US-A1- 2012 082 762
- US-A1- 2013 133 588
- US-A1- 2015 011 500
- US-A1- 2015 305 369
- US-B2- 8 524 299
- JEFF PHILLIPS: "Smoked Pigs on the Beach - Shrimp & Sausage", 31 July 2014 (2014-07-31) - 2014, pages 1 - 2, XP002794063, Retrieved from the Internet <URL:https://www.smoking-meat.com/july-31-2014-smoked-pigs-on-the-beach-shrimp-sausage> [retrieved on 20190905]

## Description

### RELATED APPLICATIONS

This application claims priority to U.S. Patent Application No. 62/286,175, filed January 22, 2016, and U.S. Patent Application No. 62/417, 647, filed November 4, 2016.

### BACKGROUND

### 1. Field of the Invention

This disclosure relates to a process for making snacks. More particularly, the disclosure relates to meat snacks, jerky and jerky sausage and methods of making the same. The scope of the present invention is defined by the appended claims.

### 2. Description of Related Art

Jerky meats and sausage products are traditionally prepared from raw materials such as strips or chunks of meat or comminuted meat. These raw materials are formed, processed and then cut into strips. *See, e.g.,* U.S. Patent No. 5,731,029. Jerky meats and sausage products prepared by these traditional methods typically have relatively low protein content. From www site "www.smoking.meat-com/july-31-2014-smoked-pigs-on-the-beach-shrimp-sausage" a recipe is known whereby shrimp is combined with smoked sausages as a snack. US 20002/185084 describes a food product which consist of jerky coated with 5-50% gelatin from animal protein and 50-95% rawhide. WO 2006/130738 A2 discloses the use of a chicken digest as an ingredient to coat a meat product intended for an animal food.

### SUMMARY

The instrumentalities disclosed here provide jerky or sausage products that are made by an improved process which enhances the protein content of the products. In one embodiment, the jerky and sausage products made by the disclosed process may have higher protein content than traditional jerky and sausage products while maintaining the same or similar texture and taste. In another embodiment, the jerky and sausage products made by the disclosed process may contain proteins from two or more different species.

The food product contains a poultry protein mix and a meat block. The meat block has a protein content (i.e., total protein as a percentage of total weight) that is lower than the protein content of the protein mix. In another aspect, the protein content of the protein mix may be at least twice or 3 times as high as the protein content of the meat block.

In another embodiment, the food product may be made into a particular shape, such as but not limited to a strip, a sheet and a cube, and wherein the food product is a meat snack, a jerky or a jerky sausage.

In another embodiment, the protein mix may be prepared from a first organism, and the meat block may be prepared from a second organism, and the first organism and the second organism may belong to different species. By way of example, the protein mix is prepared from poultry, while the meat block may be prepared from beef.

The protein mix is prepared from poultry and the proteins from the protein mix contribute to more than 50% of total protein content in the food product.

In one embodiment, dehydrated (e.g., spray dried) meat powder or concentrated meat broth may be used to prepare the jerky and sausage products. The meat powder and meat broth may also be referred to as "protein mix" in this disclosure. Dehydrated meat powder, such as chicken powder, is an excellent source of proteins and amino acids. In another embodiment, dehydrated meat powder derived from one meat source may be added to other meats in combinations with flavors, sweeteners, salts, cure and other suitable ingredients. The addition of meat powder to jerky formula and processes may produce meat snacks that have higher protein content than traditional jerky meat or jerky sausage.

In one embodiment, the disclosed products may be consumed by humans or pets (e.g., cats or dogs).

In one embodiment, the dehydrated meat powder or broth may be derived from various species, which may include but are not limited to the various species of poultry. Examples of poultry may include, for example, chicken, turkey, duck or other birds. In another embodiment, the meat powder or broth may be derived from beef, pork, lamb and other domestic animals grown for food as well as from wild game. In another embodiment, the protein mix may be derived from insects.

In one embodiment, these dehydrated meat powder and broth compositions (protein mix) may contain from 1% to 99% (w/w) protein. In another embodiment, the protein concentration of the meat powder and broth compositions may be from 20% to 99% (w/w), 40% to 99% (w/w) 60% to 99% (w/w), or as high as 80%, 90%, or 99% (w/w). In another embodiment, the protein mix may contain at least 90% (w/w) animal protein. The high protein powder or broth may help boost the total protein content of the food product. In one aspect, the total protein content of the food product is from about 20% to about 80%. In another aspect, the total protein content of the food product is from about 40% to about 60%.

In one embodiment, the proteins from the protein mix may contribute more than 50%, 60%, 70%, 80%, or more than 90% to the total protein content of the food product.

In one embodiment, the protein mix may contain one or more peptides having 10 or fewer amino acids. In another embodiment, the protein mix may contain one or more amino acids selected from the group consisting of arginine, lysine, methionine, leucine, isoleucine, valine and combination thereof. In another embodiment, the protein mix may contain one or more branched chain amino acids, and the content of these branched chain amino acids in the protein mix is higher than content of branched chain amino acids in the meat block.

In certain embodiments, the meat powder and broth may be prepared according to methods described in U.S. Patent application Nos. 14/325,694; 14/698,150; 14/698,274 and 14/698,332.

### DETAILED DESCRIPTION

The present disclosure advances the art by providing food compositions, such as meat jerky or jerky sausage, that have enhanced protein content. In one embodiment, a protein mix may be added to meat jerky or jerky sausage. In another embodiment, the protein mix is enriched in animal proteins. In another embodiment, the protein mix is a dehydrated high protein powder or broth prepared from natural meat.

In another embodiment, the dehydrated meat powder may be extracted from animal meat or meat from the bones in a mechanical meat separation process. The meat and/or bone may be cooked in slurry and the fraction of fat is removed and the solid protein is collected as well as the water or broth fraction. The protein and broth fractions may be collected and dried by different process methods. Examples of drying process methods may include but are not limited to air drying, spray drying or other methods known in the art.

In another embodiment, the meat powder may be derived from a rendering process.

In one aspect, the protein mix may contain hydrolyzed protein. In another aspect, the protein mix may be prepared from acidic or enzymatic treatment. This protein mix may have an enhanced functionality, which may include, for example, particle size, texture, solubility, ingredient bind, water holding, flavor or other chemical and physical properties. In another aspect, the protein mix may contain higher content of branched chain amino acids.

In another embodiment, peptides, derivative amino acids and metabolite constituents or compounds may be added to the protein mix. Examples of such peptides, derivative amino acids and metabolite constituents or compounds may include but are not limited to creatine, creatinine, carnosine, taurine, L-carnitine and anserine.

In another embodiment, the jerky or jerky sausage include a meat block. The meat block may come from whole muscle of animals and may be in the form of strips, pieces, cuts, or combination thereof. The meat block may also be ground or chopped. In another embodiment, some meat (for example, poultry) may contain proportions of skin. In one aspect, the skin portion may be smaller than the natural skin proportion of the same amount of meat. In another aspect, the skin portion may be about the same portion as the natural skin proportion of the animal.

In another embodiment, the composition of these meat materials (i.e., meat block) may vary in protein content depending on the location of the muscle and the final state of the meat. In one embodiment, the protein content of meat may vary, ranging from about 2% to about 30%. Typically, the protein content of raw meat ranges from about 15% to about 22%. In another embodiment, the fat content of meat may range from 1% to 60%, and the moisture may range from about 20% to about 90%.

In one embodiment, the jerky and jerky sausage may contain from about 1% to about 40%, or from about 5% to about 20% protein. In another embodiment, the jerky and jerky sausage may have varying amounts of inherent and bound fat. In another embodiment, the moisture content is significantly reduced to achieve a water activity of 0.80 (a_{w}) and a moisture protein ratio (MPR) of 0.75:1 or less.

In another embodiment, the high protein jerky and Jerky sausage with added meat powder has higher content of branched chain amino acids. The disclosed high protein jerky and jerky sausage may help individuals such as children, elderly or athletes who need higher protein in their diet.

The terms "poultry part" and "animal part" refer to parts of a bird or an animal, as well as whole bird or whole animal. For purpose of this disclosure, the term "animal" includes but not limited to cattle, poultry, pigs, domestic animals, wild animals, among others. The term "organism" refers to any living species, such as animals, plants, insect, among others.

The term "broth" refers to an aqueous composition containing at least one solute. A broth may be a liquid, a solution, or a suspension. For purpose of this disclosure, the term "broth" may be used interchangeably with the terms "stock," "extract," "fond," or "demi-glace." It is to be recognized that as a broth becomes more and more concentrated, it may become highly viscous and may have much lower liquidity as compared to a dilute broth. The concentrated broth composition of the present disclosure may be a highly concentrated broth in a liquid form. Alternatively, a concentrated broth composition may be a dried or semi-dried broth product in the form of powder or paste.

It is to be noted that, as used in this disclosure, the singular forms "a," "an," and "the" include plural referents unless the context clearly dictates otherwise.

### Examples

The following examples are provided to illustrate the present invention, but are not intended to be limiting. The reagents, materials and instruments are presented as typical components, and various substitutions or modifications may be made in view of the foregoing disclosure by one of skills in the art without departing from the present invention.

### Example 1 Preparation of meat snacks, Jerky, Jerky Sausage or similar products using dehydrated meat powders or broth powder

Methods are disclosed for preparing an enhanced composition of meat snacks, Jerky, Jerky Sausage or similar products with dehydrated meat powders or broth powder. With respect to the inherent protein concentration in the starting meat block of the Jerky formula, the final protein composition can be increased by matching the meat block protein composition from 1% to 1000% or greater. For example, a meat block of 100 grams of chicken meat that is 20% protein² can have 20 grams of added dehydrated chicken powder (100% added protein) to the formula. The raw protein formula has been increased to almost 200% of the original protein concentration with the inherent protein from the meat and the dehydrated chicken powder.

Jerky formulas may have low protein content from the meat block or from a low amount of meat block in the formula. The protein content can be increased in the formula by the addition of a meat protein powder. For example, in a 100 Kg formula that has a meat block of 40 Kg of beef of which 22% is protein and 20% is fat, this calculates to 8.8 Kg of protein. To increase the protein content, 17.6 Kg of dehydrated beef powder (99% protein) is added to the formula with 2 kg of dextrose, and 0.25 Kg each of salt and phosphate and 200 ppm of sodium nitrite. The resulting formula has 32 kg of water added the mixture is vacuum tumbled, formed, cooked, and dried to a MPR of 0.75:1 with an a_{w} of <0.80. The original formula with the inherent 8.8% protein and the added 17.6% protein combine for 26.4% protein. After drying to the MPR, this final product will contain 46.5% protein in the final formula. Finished meat snacks, Jerky or Jerky sausage can be formed into flat slices, stick form or special designs such as but not limited to squares, rectangles, triangles, circles, stars, bones to others with varying degrees of thickness.

## Claims

1. A food product comprising a poultry protein mix and a meat block, wherein the meat block has a protein content lower than protein content of the poultry protein mix, and wherein proteins from the poultry protein mix contribute to more than 50% of total protein content in said food product wherein the poultry protein mix further comprises one or more branched chain amino acids, the content of said branched chain amino acids in said poultry protein mix being higher than content of branched chain amino acids in said meat block.

2. The food product of claim 1, wherein the food product is in a shape selected from the group consisting of a strip, a sheet and a cube, and wherein the food product is a meat snack, a jerky or a jerky sausage.

3. The food product of claim 1, wherein the protein mix has a protein concentration from 40% to 99% (w/w).

4. The food product of any of the preceding claims, wherein the protein mix comprises at least 90% (w/w) animal protein.

5. The food product of claim 1, wherein the protein mix comprises one or more peptides having 10 or fewer amino acids.

6. The food product of claim 1, wherein the protein mix comprises one or more amino acids selected from the group consisting of arginine, lysine, methionine, leucine, isoleucine, valine and combination thereof.

7. The food product of claim 1, wherein the protein content of the food product is from about 20% to about 80%.

8. The food product of claim 1, wherein the protein mix is a dehydrated protein powder prepared from a poultry source or a concentrated broth prepared from a poultry source.

9. The food product of claim 1, wherein the protein mix has a protein content that is at least twice as high as protein content of the meat block.

10. A method of making a food product according to one of the preceding claims, said method comprising
adding a protein mix to a meat block, wherein the meat block has a protein content lower than protein content of the protein mix, and wherein proteins from the protein mix contribute to more than 50% of total protein content in said food product.

11. The method of claim 10, wherein the food product is made into a shape selected from the group consisting of a strip, a sheet and a cube.

12. The method of claim 11, wherein the protein mix is prepared from poultry, and wherein the protein content of the food product is from about 20% to about 80%.

13. The method of claim 10, wherein the protein mix has a protein content that is at least twice as high as protein content of the meat block.

## Patentansprüche

1. Lebensmittelprodukt, das eine Geflügelproteinmischung und einen Fleischblock umfasst, wobei der Fleischblock einen Proteingehalt aufweist, der niedriger ist als der Proteingehalt der Geflügelproteinmischung, und wobei Proteine aus der Geflügelproteinmischung zu mehr als 50 % des Gesamtproteingehalts in dem Lebensmittelprodukt beitragen, wobei die Geflügelproteinmischung weiter eine oder mehrere verzweigtkettige Aminosäuren umfasst, wobei der Gehalt der verzweigtkettigen Aminosäuren in der Geflügelproteinmischung höher als der Gehalt an verzweigtkettigen Aminosäuren in dem Fleischblock ist.

2. Lebensmittelprodukt nach Anspruch 1, wobei das Lebensmittelprodukt in einer Form vorliegt, die aus der Gruppe ausgewählt ist, die aus einem Streifen, einer Scheibe und einem Würfel besteht, und wobei das Lebensmittelprodukt ein Fleischsnack, Dörrfleisch oder ein Dörrwürstchen ist.

3. Lebensmittelprodukt nach Anspruch 1, wobei die Proteinmischung eine Proteinkonzentration von 40 % bis 99 % (Gew.-%) aufweist.

4. Lebensmittelprodukt nach einem der vorstehenden Ansprüche, wobei die Proteinmischung mindestens 90 % (Gew.-%) tierisches Protein umfasst.

5. Lebensmittelprodukt nach Anspruch 1, wobei die Proteinmischung ein oder mehrere Peptide mit 10 oder weniger Aminosäuren umfasst.

6. Lebensmittelprodukt nach Anspruch 1, wobei die Proteinmischung eine oder mehrere Aminosäuren umfasst, ausgewählt aus der Gruppe bestehend aus Arginin, Lysin, Methionin, Leucin, Isoleucin, Valin und einer Kombination davon.

7. Lebensmittelprodukt nach Anspruch 1, wobei der Proteingehalt des Lebensmittelprodukts von etwa 20 % bis etwa 80 % beträgt.

8. Lebensmittelprodukt nach Anspruch 1, wobei die Proteinmischung ein dehydriertes Proteinpulver, das aus einer Geflügelquelle zubereitet wird, oder eine konzentrierte Brühe ist, die aus einer Geflügelquelle zubereitet wird.

9. Lebensmittelprodukt nach Anspruch 1, wobei die Proteinmischung einen Proteingehalt aufweist, der mindestens doppelt so hoch ist wie der Proteingehalt des Fleischblocks.

10. Verfahren zum Herstellen eines Lebensmittelprodukts nach einem der vorstehenden Ansprüche, wobei das Verfahren Hinzufügen einer Proteinmischung zu einem Fleischblock umfasst, wobei der Fleischblock einen Proteingehalt aufweist, der niedriger als der Proteingehalt der Proteinmischung ist, und wobei Proteine aus der Proteinmischung zu mehr als 50 % des Gesamtproteingehalts in dem Lebensmittelprodukt beitragen.

11. Verfahren nach Anspruch 10, wobei das Lebensmittelprodukt in eine Form gebracht wird, die aus der Gruppe ausgewählt ist, die aus einem Streifen, einer Scheibe und einem Würfel besteht.

12. Verfahren nach Anspruch 11, wobei die Proteinmischung aus Geflügel zubereitet wird und wobei der Proteingehalt des Lebensmittelprodukts von etwa 20 % bis etwa 80 % beträgt.

13. Verfahren nach Anspruch 10, wobei die Proteinmischung einen Proteingehalt aufweist, der mindestens doppelt so hoch ist wie der Proteingehalt des Fleischblocks.

## Revendications

1. Produit alimentaire comprenant un mélange de protéines de volaille et un bloc de viande, dans lequel le bloc de viande a une teneur en protéines inférieure à la teneur en protéines du mélange de protéines de volaille, et dans lequel les protéines provenant du mélange de protéines de volaille contribuent à plus de 50 % de la teneur totale en protéines dudit produit alimentaire, dans lequel le mélange de protéines de volaille comprend en outre un ou plusieurs acides aminés à chaîne ramifiée, la teneur en dits acides aminés à chaîne ramifiée dans ledit mélange de protéines de volaille étant supérieure à la teneur en acides aminés à chaîne ramifiée dans ledit bloc de viande.

2. Produit alimentaire selon la revendication 1, dans lequel le produit alimentaire se présente sous une forme choisie parmi le groupe constitué d'une bande, d'une feuille et d'un cube, et dans lequel le produit alimentaire est un snack à base de viande, une viande séchée ou une saucisse séchée.

3. Le produit alimentaire selon la revendication 1, dans lequel le mélange de protéines a une concentration en protéines comprise entre 40 % et 99 % (p/p).

4. Le produit alimentaire selon l'une quelconque des revendications précédentes, dans lequel le mélange de protéines comprend au moins 90 % (p/p) de protéines animales.

5. Le produit alimentaire selon la revendication 1, dans lequel le mélange de protéines comprend un ou plusieurs peptides ayant 10 acides aminés ou moins.

6. Le produit alimentaire selon la revendication 1, dans lequel le mélange de protéines comprend un ou plusieurs acides aminés choisis dans le groupe constitué par l'arginine, la lysine, la méthionine, la leucine, l'isoleucine, la valine et leurs combinaisons.

7. Produit alimentaire selon la revendication 1, dans lequel la teneur en protéines du produit alimentaire est comprise entre environ 20 % et environ 80 %.

8. Produit alimentaire selon la revendication 1, dans lequel le mélange de protéines est une poudre de protéines déshydratée préparée à partir d'une source de volaille ou d'un bouillon concentré préparé à partir d'une source de volaille.

9. Produit alimentaire selon la revendication 1, dans lequel le mélange de protéines a une teneur en protéines au moins deux fois plus élevée que la teneur en protéines du bloc de viande.

10. Procédé de fabrication d'un produit alimentaire selon l'une des revendications précédentes, ledit procédé comprenant l'ajout d'un mélange protéique à un bloc de viande, dans lequel le bloc de viande a une teneur en protéines inférieure à la teneur en protéines du mélange protéique, et dans lequel les protéines provenant du mélange protéique contribuent à plus de 50 % de la teneur totale en protéines dudit produit alimentaire.

11. Procédé selon la revendication 10, dans lequel le produit alimentaire est mis sous une forme choisie parmi le groupe constitué d'une bande, d'une feuille et d'un cube.

12. Procédé selon la revendication 11, dans lequel le mélange de protéines est préparé à partir de volaille, et dans lequel la teneur en protéines du produit alimentaire est comprise entre environ 20 % et environ 80 %.

13. Procédé selon la revendication 10, dans lequel le mélange de protéines a une teneur en protéines au moins deux fois plus élevée que la teneur en protéines du bloc de viande.
